# FASCICULE DE BREVET EUROPEEN

(11) **EP 3 069 683 B1**
(45) Date de publication et mention de la délivrance du brevet: **16.05.2018**
(21) Numéro de dépôt: 16160766.8
(22) Date de dépôt: 16.03.2016
(51) Int. Cl.: A61C 8/00

(54) **PROTHÈSE DENTAIRE PLURALE TRANSFIXÉE**
TRANSFIXIERTE MULTIPLE ZAHNPROTHESE
TRANSFIXED MULTIPLE DENTAL PROSTHESIS

(30) Priorité: 17.03.2015 FR 1552207; 03.07.2015 FR 1556340
(43) Date de publication de la demande: 21.09.2016
(73) Titulaire: ANTHOGYR, 74700 Sallanches (FR)
(72) Inventeur: RICHARD, Hervé, 73590 NOTRE DAME DE BELLECOMBE (FR)
(74) Mandataire: Cabinet Poncet

(56) Documents cités:
- EP-A1- 2 223 667
- WO-A1-2006/033098
- KR-B1- 101 307 411
- KR-B1- 101 307 411
- US-B1- 6 663 388
- US-B1- 8 727 774

## Description

La présente invention concerne le domaine de l'implantologie dentaire, et notamment le traitement de l'édentement d'arcade dentaire avec une prothèse plurale de type transfixée destinée à être rapportée et fixée sur une pluralité d'implants dentaires.

Une prothèse plurale implanto-portée de type transfixée est destinée à reposer sur l'arcade dentaire du patient, en étant fixée à plusieurs implants dentaires implantés dans l'os maxillaire ou mandibulaire du patient, pour former plusieurs dents prothétiques. La fixation de la prothèse aux implants est effectuée par l'intermédiaire de vis de fixation traversant la prothèse et pénétrant chacune dans un implant respectif, d'où les expressions de « prothèse transfixée » et de « vis de transfixation ». En cas de besoin, la prothèse doit pouvoir être retirée, par exemple pour réparation.

Pour des raisons de résistance mécanique, notamment de tenue de l'implant dans l'os maxillaire ou mandibulaire, les implants sont orientés selon des directions axiales qui sont obliques entre elles et généralement obliques par rapport à la surface générale de l'arcade dentaire.

Du fait des orientations relatives obliques des implants entre eux, on a souvent recours à des piliers angulés. Un pilier angulé est une pièce intermédiaire, destinée à être rapportée sur l'implant selon une première direction axiale (correspondant à la direction longitudinale de l'implant), présentant une cavité filetée intérieurement et orientée selon une deuxième direction axiale faisant un angle avec la première direction axiale. La cavité filetée intérieurement reçoit la vis de transfixation selon la deuxième direction axiale. Le recours à des piliers augmente le nombre de pièces à manipuler par le praticien, et complique grandement sa tâche car les piliers doivent avoir des hauteurs, angles et orientations précis.

Par ailleurs, pour qu'une prothèse dentaire plurale transfixée soit installée correctement en bouche, et pour que le praticien puisse contrôler sa bonne adaptabilité avant fixation, il faut commencer par une étape de posage de la prothèse dentaire sur l'arcade dentaire du patient. Lors de ce posage, le patient ouvre la bouche au maximum pour permettre au praticien d'insérer par translation la prothèse dentaire plurale transfixée dans sa bouche jusqu'à la poser sur l'arcade dentaire du patient. Puis, le praticien doit insérer les différentes vis de transfixation dans des alésages ménagés dans la prothèse dentaire. Mais les vis de transfixation ont des dimensions très réduites les rendant difficiles à manipuler. Il y a donc un risque qu'une vis échappe au praticien et tombe dans la bouche du patient, avec l'éventualité que celui-ci l'avale. Tel est par exemple le cas dans le document EP 2 223 667 A1, qui décrit une prothèse dentaire plurale transfixée conforme au préambule de la revendication 1.

Pour limiter les risques induits par les manipulations de vis de transfixation, le demandeur a imaginé de rendre les vis de transfixation captives dans les alésages ménagés dans la prothèse dentaire. Les vis de transfixation sont alors solidaires de la prothèse dentaire avant que la prothèse dentaire soit introduite dans la bouche du patient. Dans ce cas, la tige filetée de la vis de transfixation dépasse au moins en partie et en permanence sous la prothèse dentaire hors de l'alésage dans lequel la vis de transfixation est insérée. Ce dépassement permanent, combiné avec l'amplitude limitée d'ouverture de la bouche du patient, induit un risque élevé de conflit entre la tige filetée des vis et les implants dentaires lorsque le praticien introduit par translation la prothèse dentaire plurale transfixée dans la bouche du patient en vue de la poser sur l'arcade dentaire du patient. Or, en cas de conflit (par butée d'une tige filetée d'une vis sur un implant), il y a un risque que le filetage de la vis de transfixation (de très petites dimensions) soit endommagé. Une vis de transfixation endommagée peut ne plus se visser dans l'implant dentaire situé en correspondance, ou peut se visser de façon incorrecte dans l'implant dentaire. La vis de transfixation endommagée peut même parfois se rompre lors de son vissage dans l'implant dentaire, ou endommager le tronçon fileté intérieurement de l'implant dentaire la recevant, ce qui est dramatique car ledit implant dentaire est alors déjà ostéo-intégré, et son retrait, afin d'en retirer le tronçon fileté rompu de vis de transfixation ou changer l'implant dentaire, n'est guère envisageable.

Le document US 6,663,388 B1 concerne exclusivement une prothèse dentaire unitaire, et décrit plus particulièrement la fixation d'un pilier dentaire sur un implant dentaire au moyen d'une vis de fixation retenue captive dans un alésage dudit pilier dentaire. La vis de fixation dépasse en permanence hors de l'alésage du pilier dentaire.

Un problème proposé par la présente invention est de permettre une fixation optimale et amovible d'une prothèse dentaire plurale implanto-portée de type transfixée, à l'aide de moyens de liaison aux implants qui limitent les risques de manipulation du praticien, et qui limitent les risques de détériorations.

Pour atteindre ces objets ainsi que d'autres, l'invention propose une prothèse dentaire plurale transfixée destinée à être rapportée et fixée sur une pluralité d'implants dentaires au moyen de plusieurs vis de transfixation ayant chacune une tige à tronçon fileté destiné à être reçu par vissage dans un implant dentaire respectif ; selon l'invention :
- chaque vis de transfixation est retenue captive dans un alésage respectif ménagé dans la prothèse dentaire plurale transfixée et s'étendant selon une direction axiale respective,
- chaque vis de transfixation captive est mobile en rotation autour de la direction axiale de l'alésage respectif, et est déplaçable en translation selon la direction axiale de l'alésage respectif entre une position de retrait et au moins une position de vissage,
- en position de retrait, le filetage du tronçon fileté de la vis de transfixation ne dépasse pas hors de l'alésage respectif dans lequel est retenue captive la vis de transfixation,
- en position de vissage, le filetage du tronçon fileté de la vis de transfixation dépasse au moins en partie hors de l'alésage respectif dans lequel est retenue captive la vis de transfixation.

Lors de l'introduction de la prothèse dentaire plurale transfixée dans la bouche du patient, si une vis de transfixation vient en conflit avec un obstacle constitué par un implant dentaire (ou une dent avoisinante du patient), elle peut se déplacer en position de retrait pour échapper à l'obstacle. En pratique, si le praticien sent une légère résistance lors de l'introduction de la prothèse dentaire plurale transfixée dans la bouche du patient, signe d'un conflit probable entre une vis de transfixation et un obstacle constitué par un implant dentaire (ou une dent avoisinante), un léger mouvement de translation alternatif de faible amplitude, vers et à l'écart de l'os maxillaire ou mandibulaire, suffit à provoquer le déplacement de la vis de transfixation en position de retrait pour que l'obstacle soit ensuite franchi. Le praticien peut alors poursuivre l'introduction de la prothèse dentaire plurale transfixée dans la bouche du patient jusqu'à la poser sur l'arcade dentaire du patient.

Avantageusement, on peut prévoir que :
- la tige de chaque vis de transfixation se termine par un tronçon distal de centrage faisant suite au tronçon fileté,
- le tronçon distal de centrage comporte une section transversale dont les dimensions diminuent en se déplaçant à l'écart du tronçon fileté,
- en position de retrait, la vis de transfixation dépasse hors de l'alésage dans lequel elle est retenue captive selon tout ou partie de son tronçon de centrage.

Lors d'un appui latéral sur un obstacle, la forme d'un tel tronçon de centrage fait apparaître une force tendant à déplacer la vis de transfixation vers sa position de retrait. De plus, un tel tronçon de centrage permet de bien centrer la vis de transfixation par rapport à l'implant dentaire pour favoriser un bon vissage dans ce dernier.

De préférence, le tronçon de centrage peut-être sensiblement conique ou tronconique.

Avantageusement, on peut prévoir que :
- le filetage du tronçon fileté de la vis de transfixation comporte un premier tronçon de filetage et un deuxième tronçon de filetage faisant suite au premier tronçon de filetage et s'étendant jusqu'au tronçon de centrage,
- le premier tronçon de filetage comporte un diamètre extérieur constant,
- le deuxième tronçon de filetage comporte un diamètre extérieur qui décroît en direction du tronçon de centrage.

Le deuxième tronçon de filetage, avec son diamètre extérieur qui décroît en direction du tronçon de centrage, vient plus progressivement en prise dans le tronçon fileté intérieurement de l'implant situé en correspondance.

De préférence, le filetage du tronçon fileté de la vis de transfixation peut comporter au moins deux filets, de préférence trois. Le praticien aura ainsi moins de tours de vissage à appliquer à la vis pour que celle-ci vienne en prise dans l'implant dentaire en étant retenue selon une force de retenue de valeur satisfaisante. Et la course de vissage de la vis de transfixation est également plus réduite pour que celle-ci vienne en prise dans l'implant dentaire en étant retenue selon une force de retenue de valeur satisfaisante, ce qui permet de limiter encore l'encombrement axial de la vis de transfixation et contribue à faciliter l'introduction de la prothèse dentaire dans la bouche du patient.

Dans un premier mode de réalisation particulier de l'invention, on peut avantageusement prévoir que :
- la vis de transfixation comporte un tronçon à épanouissement radial depuis lequel s'étend un tronçon de vis de transfixation présentant une section transversale extérieure à dimensions inférieures à celles de l'épanouissement radial,
- chaque vis de transfixation est retenue captive dans son alésage respectif par l'intermédiaire d'un organe de fixation venant simultanément :
   - au moins en partie s'engager dans un logement périphérique intérieur ménagé dans l'alésage respectif de la prothèse dentaire plurale transfixée,
   - sous l'épanouissement radial et autour du tronçon de vis de transfixation présentant une section transversale extérieure à dimensions inférieures à celles de l'épanouissement radial.

La vis a ainsi une forme très simple permettant une fabrication à faible coût.

Dans ce premier mode de réalisation particulier de l'invention, la translation de la vis de transfixation entre ses positions de retrait et de vissage peut être rendue possible par le fait que le logement périphérique intérieur ménagé dans l'alésage respectif, et/ou le tronçon de vis de transfixation présentant une section transversale extérieure à dimensions inférieures à celles de l'épanouissement radial, présentent une hauteur selon la direction axiale supérieure à la hauteur de la partie de l'organe de fixation venant en prise dans le logement périphérique intérieur.

Dans une première variante du premier mode de réalisation particulier de l'invention, on peut prévoir que :
- l'organe de fixation est une bague de retenue à fente radiale,
- le logement périphérique intérieur est une gorge annulaire s'étendant radialement par rapport à la direction axiale d'alésage.

Dans une deuxième variante du premier mode de réalisation particulier de l'invention, on peut prévoir que :
- l'organe de fixation comprend une bague annulaire à symétrie de révolution autour d'un axe central, et s'étendant selon l'axe central entre une extrémité proximale et une extrémité distale,
- l'organe de fixation comprend au moins un tronçon angulaire se développant en arc entre une première extrémité reliée à l'extrémité distale de la bague annulaire et une deuxième extrémité libre,
- ledit au moins un tronçon angulaire est en partie déplaçable à partir de sa première extrémité dans un plan transversal perpendiculaire à l'axe central entre une position de retrait et au moins une position de saillie, en étant en permanence élastiquement rappelé en position de saillie,
- en position de retrait, ledit au moins un tronçon angulaire est compris dans le volume d'un cylindre prolongeant la surface cylindrique extérieure de la bague annulaire,
- en position de saillie, la deuxième extrémité libre dudit au moins un tronçon angulaire dépasse au-delà du volume du cylindre prolongeant la surface cylindrique extérieure de la bague annulaire.

Dans la deuxième variante du premier mode de réalisation particulier de l'invention, on peut avantageusement prévoir que le logement périphérique intérieur comporte au moins un tronçon angulaire de gorge s'étendant radialement par rapport à la direction axiale d'alésage. Un tel logement périphérique intérieur est notamment utile lorsque la place disponible radialement dans la prothèse dentaire pour réaliser le logement périphérique intérieur est limitée selon certaines directions radiales.

En alternative, le logement périphérique intérieur peut être une gorge annulaire s'étendant radialement par rapport à la direction axiale d'alésage.

Dans un deuxième mode de réalisation particulier de l'invention, on peut avantageusement prévoir que la vis de transfixation est montée rotative et retenue en translation dans son alésage respectif par l'intermédiaire d'une bague de retenue compressible, de préférence au moyen d'une fente radiale, venant simultanément en prise dans une gorge périphérique extérieure ménagée sur la vis de transfixation et dans une gorge périphérique intérieure ménagée dans l'alésage respectif.

Dans ce deuxième mode de réalisation particulier de l'invention, la translation de la vis de transfixation entre ses positions de retrait et de vissage peut être rendue possible par le fait que la gorge périphérique intérieure ménagée dans l'alésage respectif, et/ou la gorge périphérique extérieure ménagée sur la vis de transfixation, présentent une hauteur selon la direction axiale supérieure à la hauteur de la bague de retenue venant en prise dans la gorge périphérique intérieure ménagée dans l'alésage respectif.

Selon un autre aspect de l'invention, il est proposé un implant dentaire s'étendant entre une extrémité distale de connexion destinée à recevoir une prothèse dentaire plurale transfixée, et une extrémité proximale d'ancrage destinée à être insérée dans l'os maxillaire ou mandibulaire d'un patient, comprenant un alésage intérieur borgne débouchant à l'extrémité distale de connexion et comportant un premier tronçon fileté intérieurement destiné à recevoir le tronçon fileté d'une vis de transfixation ; selon l'invention, le premier tronçon fileté intérieurement s'étend depuis l'orifice de l'alésage intérieur borgne en direction de l'extrémité proximale d'ancrage.

Un tel implant dentaire, pris en combinaison avec une prothèse dentaire plurale transfixée tel que décrite précédemment, forme un ensemble dentaire.

Du fait que le premier tronçon fileté intérieurement s'étend depuis l'orifice de l'alésage intérieur borgne en direction de l'extrémité proximale d'ancrage, la longueur totale de l'implant peut être réduite afin que celui-ci présente un dépassement plus faible quand il est inséré dans l'os maxillaire ou mandibulaire d'un patient. Cela limite efficacement les risques de conflit avec les vis de transfixation d'une prothèse dentaire transfixée, et plus particulièrement une prothèse dentaire transfixée plurale. Par ailleurs, la longueur totale de la vis de transfixation de la prothèse dentaire peut également être réduite car elle n'a pas besoin de présenter une longueur trop importante pour être reçue par vissage dans l'implant dentaire, ce qui limite encore les risques de conflit et de détériorations.

Avantageusement, l'implant dentaire peut comporter une empreinte de vissage à section transversale non circulaire, accessible depuis l'orifice de l'alésage intérieur borgne à travers le premier tronçon fileté intérieurement.

De préférence, l'implant dentaire peut comporter un deuxième tronçon fileté intérieurement, accessible depuis l'orifice de l'alésage intérieur borgne à travers le premier tronçon fileté intérieurement et l'empreinte de vissage, et comportant un diamètre de filetage inférieur au diamètre de filetage du premier tronçon fileté intérieurement. Ce deuxième tronçon fileté intérieurement peut recevoir une vis de fixation d'une prothèse dentaire autre, plurale ou non, voire d'un pilier dentaire. L'implant dentaire peut ainsi convenir à plusieurs utilisations, ce qui limite le nombre d'implants que le praticien doit avoir en stock.

D'autres objets, caractéristiques et avantages de la présente invention ressortiront de la description suivante de modes de réalisation particuliers, faite en relation avec les figures jointes, parmi lesquelles :
- la figure 1 est une vue en perspective d'un premier mode de réalisation de prothèse dentaire plurale transfixée rapportée et fixée sur une pluralité d'implants dentaires ;
- la figure 2 est une vue de dessus de la prothèse dentaire plurale transfixée de la figure 1 ;
- la figure 3 est une vue en coupe de la prothèse dentaire plurale transfixée de la figure 1, selon un plan de coupe A-A illustré sur la figure 2 ;
- la figure 4 est une vue en coupe de la prothèse dentaire plurale transfixée de la figure 1, selon un plan de coupe B-B illustré sur la figure 2 ;
- la figure 5 est une vue en coupe d'une première variante d'implant dentaire destiné à recevoir la prothèse dentaire plurale transfixée de la figure 1 ;
- la figure 6 est une vue en coupe de la prothèse dentaire plurale transfixée de la figure 1, selon un plan de coupe A-A illustré sur la figure 2, rapportée et fixée sur l'implant de la figure 5 ;
- la figure 7 est une vue en coupe de la prothèse dentaire plurale transfixée de la figure 1, selon un plan de coupe C-C perpendiculaires aux plans de coupe A-A et B-B illustrés sur la figure 2 ;
- la figure 8 est une vue en perspective d'un organe de fixation utilisé dans le premier mode de réalisation de prothèse dentaire plurale transfixée ;
- la figure 9 est une vue de dessous de l'organe de fixation de la figure 8 ;
- la figure 10 est une vue de dessus de l'organe de fixation de la figure 8 ;
- la figure 11 est une vue de côté d'une vis de transfixation utilisée dans le premier mode de réalisation de prothèse dentaire plurale transfixée ;
- la figure 12 est une vue de dessous de la vis de transfixation de la figure 11 ;
- la figure 13 est une vue en perspective d'un organe de fixation utilisé dans un deuxième mode de réalisation de prothèse dentaire plurale transfixée ;
- les figures 14 et 15 sont des vues en coupe d'une première variante du deuxième mode de réalisation de prothèse dentaire plurale transfixée ;
- les figures 16 et 17 sont des vues en coupe d'une deuxième variante du deuxième mode de réalisation de prothèse dentaire plurale transfixée ;
- les figures 18 et 19 sont des vues en coupe d'une troisième variante du deuxième mode de réalisation de prothèse dentaire plurale transfixée ; et
- la figure 20 est une vue en coupe de la prothèse dentaire plurale transfixée de la figure 1, selon un plan de coupe A-A illustré sur la figure 2, rapportée et fixée sur une deuxième variante d'implant.

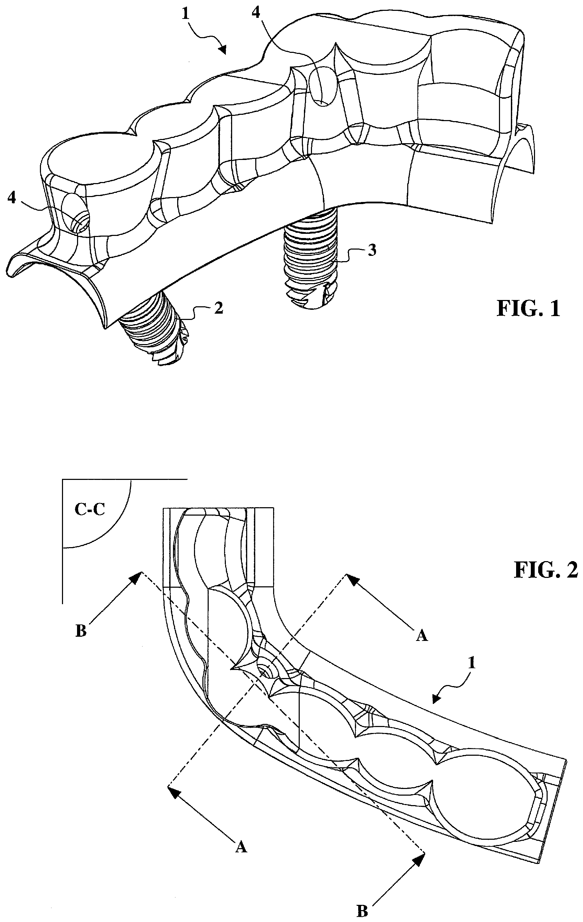

Sur les figures 1 et 2 est illustrée une prothèse dentaire 1 plurale transfixée destinée à être rapportée et fixée sur des implants dentaires 2 et 3 au moyen de plusieurs vis de transfixation 4. Les implants dentaires 2 et 3 sont orientés de façon oblique l'un par rapport à l'autre.

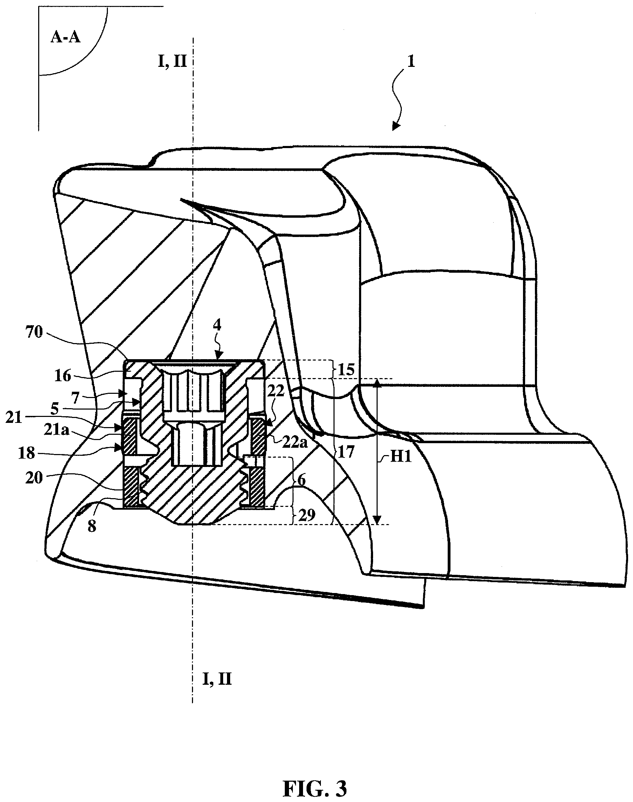

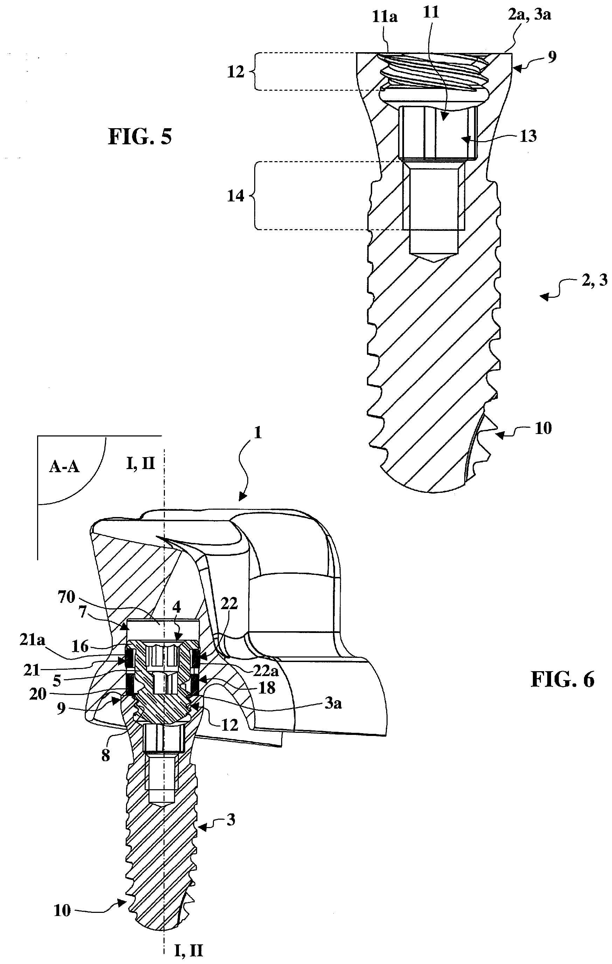

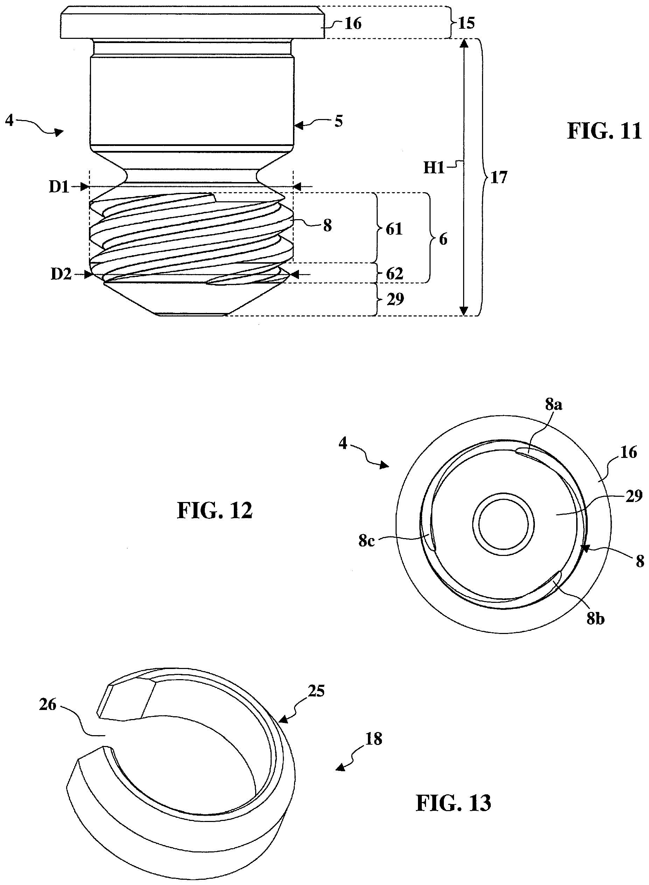

Un premier mode de réalisation de prothèse dentaire 1 est illustré sur les figures 3, 4, 6 et 7. Dans ce mode de réalisation, il est fait usage d'une vis de transfixation 4 telle que celle illustrée sur les figures 11 et 12. Cette vis de transfixation 4 comporte une tige 5 à tronçon fileté 6 destiné à être reçu par vissage dans un implant dentaire 2 ou 3 tel qu'illustré plus en détails sur la figure 5.

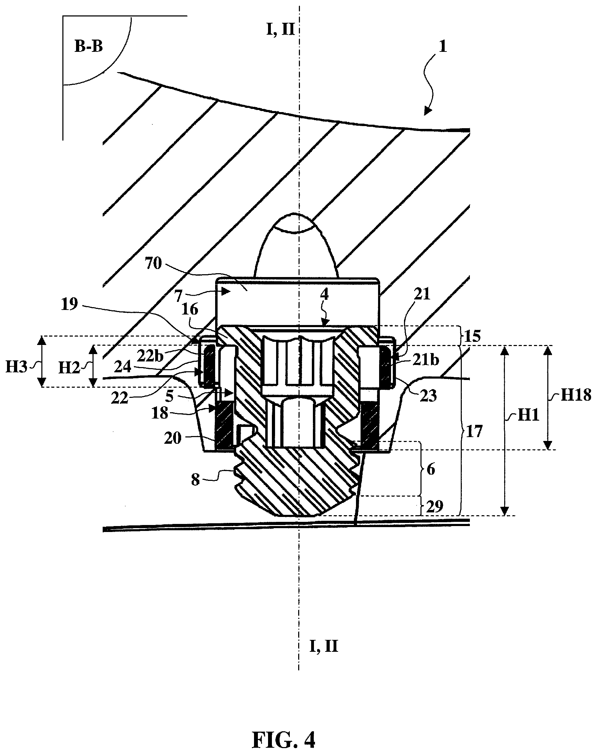

Sur les figures 3 et 4, on voit que la vis de transfixation 4 est retenue captive dans un alésage 7 ménagé dans la prothèse dentaire 1 plurale transfixée et s'étendant selon une direction axiale I-I. La vis de transfixation 4 est mobile en rotation autour de la direction axiale I-I, et est déplaçable en translation selon la direction axiale I-I entre une position de retrait (figure 3) et au moins une position de vissage (figure 4).

En position de retrait (figure 3), le filetage 8 du tronçon fileté 6 de la vis de transfixation 4 ne dépasse pas hors de l'alésage 7 dans lequel est retenue la vis de transfixation 4.

En position de vissage (figure 4), le filetage 8 du tronçon fileté 6 de la vis de transfixation 4 dépasse au moins en partie hors de l'alésage 7 respectif dans lequel est retenue captive la vis de transfixation 4. Ce dépassement du filetage 8 hors de l'alésage 7 permet la réception de la vis de transfixation 4 dans l'implant dentaire 2 ou 3 illustré sur la figure 5.

Ledit implant dentaire 2 ou 3 s'étend entre une extrémité distale de connexion 9 destinée à recevoir la prothèse dentaire 1 plurale transfixée, et une extrémité proximale d'ancrage 10 destinée à être insérée (par vissage ou impaction) dans l'os maxillaire ou mandibulaire d'un patient. L'implant dentaire 2 ou 3 comprend un alésage intérieur 11 borgne débouchant à l'extrémité distale de connexion 9 et comportant un premier tronçon 12 fileté intérieurement destiné à recevoir le tronçon fileté 6 de la vis de transfixation 4. Le premier tronçon 12 fileté intérieurement s'étend depuis l'orifice 11a de l'alésage intérieur 11 borgne en direction de l'extrémité proximale d'ancrage 10. L'implant dentaire 2 ou 3 comporte également une empreinte de vissage 13 à section transversale non circulaire (polygonale par exemple), accessible depuis l'orifice 11a de l'alésage intérieur 11 borgne à travers le premier tronçon 12 fileté intérieurement. L'implant dentaire 2 ou 3 comporte également un deuxième tronçon 14 fileté intérieurement, accessible depuis l'orifice 11a de l'alésage intérieur 11 borgne à travers le premier tronçon 12 fileté intérieurement et l'empreinte de vissage 13. Le deuxième tronçon 14 comporte un diamètre de filetage inférieur au diamètre de filetage du premier tronçon 12 fileté intérieurement de façon à recevoir une vis de fixation ou de transfixation différente de la vis de transfixation 4 illustrée sur les figures 11 et 12, pour la fixation, directement ou par l'intermédiaire d'un pilier dentaire, d'une prothèse dentaire unitaire ou plurale, transfixée ou non.

Sur les figures 11 et 12, on voit que la vis de transfixation comporte un tronçon 15 à épanouissement radial 16 depuis lequel s'étend un tronçon de vis de transfixation 17 présentant une section transversale extérieure à dimensions inférieures à celle de l'épanouissement radial. On voit sur les figures 3 et 4 que la vis de transfixation 4 est retenue captive dans l'alésage 7 par l'intermédiaire d'un organe de fixation 18 venant simultanément :
- au moins en partie s'engager dans un logement périphérique intérieur 19 ménagé dans l'alésage 7 de la prothèse dentaire 1 plurale transfixée,
- sous l'épanouissement radial 16 et autour du tronçon de vis de transfixation 17 présentant une section transversale extérieure à dimensions inférieures à celles de l'épanouissement radial 16.

Pour autoriser le déplacement de la vis de transfixation 4 entre ses positions de retrait et de vissage, le tronçon de vis de transfixation 17 présente selon la direction axiale I-I une hauteur H1 supérieure à la hauteur H2 de la partie de l'organe de fixation 18 venant en prise dans le logement périphérique intérieur 19 (figure 4). Ici, la hauteur H1 est supérieure à la hauteur totale H18 de l'organe de fixation 18.

En alternative ou en complément, le logement périphérique intérieur 19 peut présenter selon la direction axiale I-I une hauteur H3 supérieure à la hauteur H2.

L'alésage 7 comporte un tronçon de dégagement 70 apte à recevoir au moins en partie la vis de transfixation 4 en position de retrait.

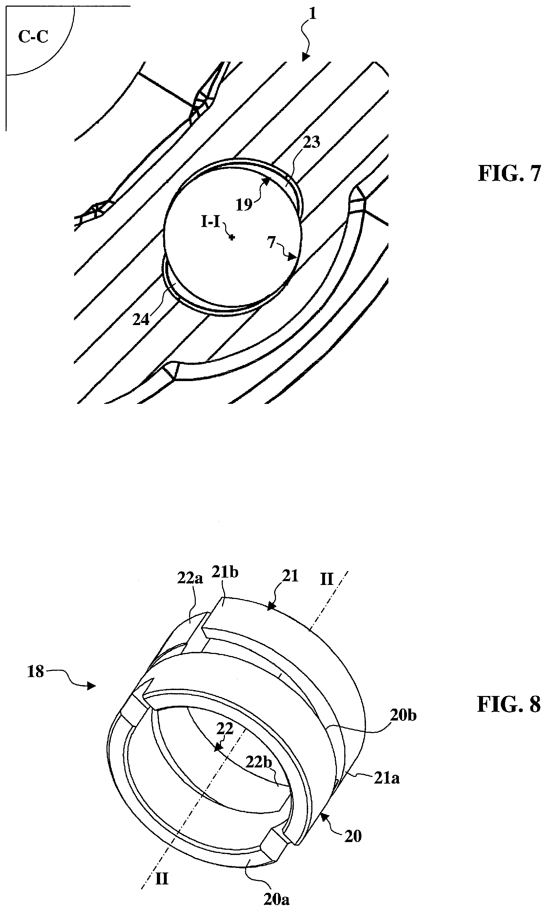

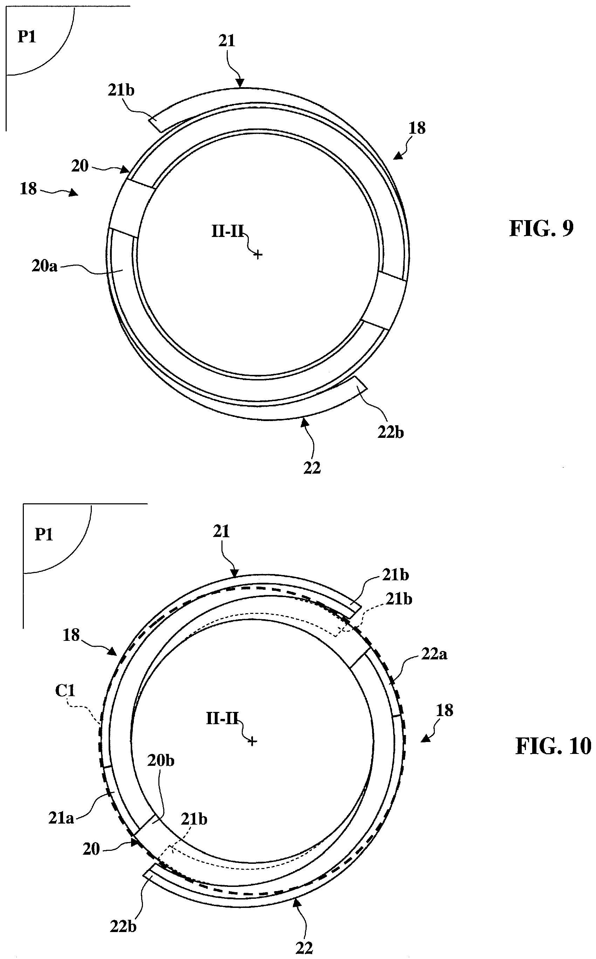

L'organe de fixation 18 utilisé sur les figures 3 et 4 est illustré de façon plus détaillée sur les figures 8 à 10. Sur ces figures, l'organe de fixation 18 comprend une bague annulaire 20 à symétrie de révolution autour d'un axe central II-II, et s'étendant selon l'axe central II-II entre une extrémité proximale 20a et une extrémité distale 20b. L'organe de fixation 18 comprend deux tronçons angulaires 21 et 22 se développant en arc entre une première extrémité 21a ou 22a reliée à l'extrémité distale 20b de la bague annulaire 20 et une deuxième extrémité 21b ou 22b libre. Les tronçons angulaires 21 et 22 sont en partie déplaçables à partir de leurs premières extrémités 21a ou 22a dans un plan transversal P1 perpendiculaire à l'axe central II-II entre une position de retrait et au moins une position de saillie, en étant en permanence élastiquement rappelés en position de saillie. La position de retrait est illustrée en traits discontinus sur la figure 10, tandis que la position de saillie est illustrée en trait continu sur la figure 10.

En position de retrait, les tronçons angulaires 21 et 22 sont compris dans le volume d'un cylindre C1 prolongeant la surface cylindrique extérieure de la bague annulaire 20. En position de saillie les deuxièmes extrémités 21b et 22b libres des tronçons angulaires 21 et 22 dépassent radialement au-delà du volume du cylindre C1 prolongeant la surface cylindrique extérieure de la bague annulaire 20.

Les tronçons angulaires 21 et 22 de l'organe de fixation 18 sont destinés à être reçus dans un logement périphérique intérieur 19 tel qu'illustré sur la figure 7, qui est une vue en coupe de la prothèse dentaire 1 plurale transfixée selon un plan de coupe C-C perpendiculaire aux plans de coupe A-A et B-B illustrés sur la figure 2.

Sur la figure 7, on voit que le logement périphérique intérieur 19 comporte deux tronçons angulaires de gorge 23 et 24 s'étendant radialement par rapport à la direction axiale I-I d'alésage 7. Comme illustré sur la figure 4, les tronçons angulaires de gorge 23 et 24 reçoivent respectivement les tronçons angulaires 21 et 22 pour retenir dans l'alésage 7 l'organe de fixation 18.

En alternative, le logement périphérique 19 destiné à recevoir l'organe de fixation 18 illustré sur les figures 8 à 10 peut être une gorge annulaire s'étendant radialement par rapport à la direction axiale I-I d'alésage 7.

Au lieu et à la place de l'organe de fixation 18 illustré sur les figures 8 à 10, la vis de transfixation 4 peut être retenue captive dans l'alésage 7 par l'intermédiaire d'un organe de fixation 18 tel qu'illustré sur la figure 13 qui est une bague de retenue 25 rendue élastiquement compressible au moyen d'une fente 26 radiale.

Dans le cas de l'utilisation de l'organe de fixation illustré sur la figure 13, le logement périphérique intérieur 19 se présente quant à lui sous la forme d'une gorge annulaire s'étendant radialement par rapport à la direction axiale I-I d'alésage 7.

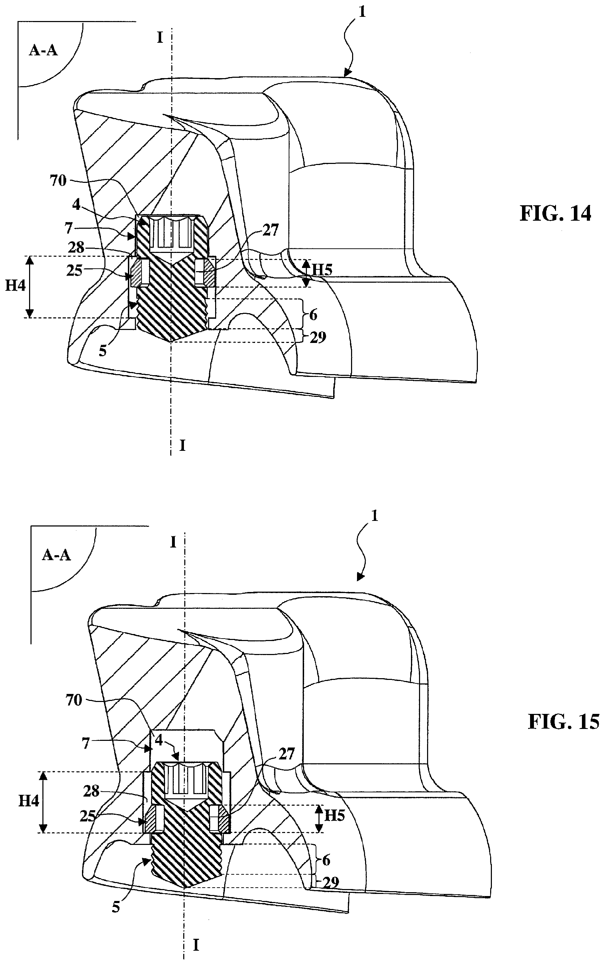

Dans un deuxième mode de réalisation de prothèse dentaire 1 plurale transfixée, comme illustré sur les figures 14 à 19, la vis de transfixation 4 peut être montée rotative et retenue en translation dans l'alésage 7 par l'intermédiaire d'une bague de retenue 25 compressible telle qu'illustrée sur la figure 13. La bague de retenue 25 est en l'occurrence rendue radialement compressible au moyen d'une fente 26 radiale.

Sur les figures 14 à 19, la bague de retenue 25 vient simultanément en prise dans une gorge périphérique extérieure 27 ménagée sur la vis de transfixation 4 et dans une gorge périphérique intérieure 28 ménagée dans l'alésage 7.

Dans la première variante illustrée sur les figures 14 et 15, la capacité de translation de la vis de transfixation 4 entre ses positions de retrait et de vissage est autorisée par le fait que la gorge périphérique intérieure 28 ménagée dans l'alésage 7 présente une hauteur H4 selon la direction axiale I-I supérieure à la hauteur H5 de la bague de retenue 25 venant en prise dans la gorge périphérique intérieure 28 ménagée dans l'alésage 7.

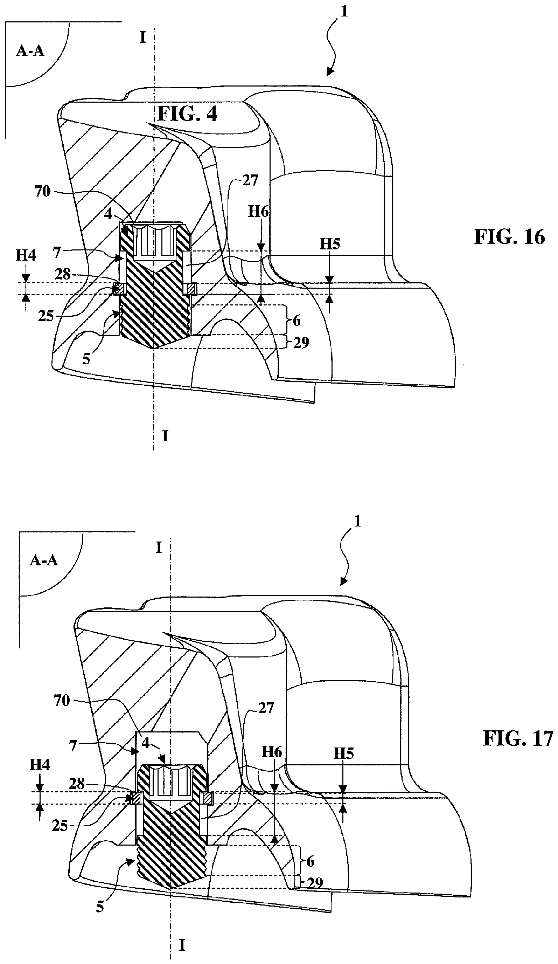

Dans la variante illustrée sur les figures 16 et 17, cette capacité en translation de la vis de transfixation 4 entre ses positions de retrait et de vissage est procurée par le fait que la gorge périphérique extérieure 27 ménagée sur la vis de transfixation 4 présente une hauteur H6 selon la direction axiale I-I supérieure à la hauteur H5 de la bague de retenue 25 venant en prise dans la gorge périphérique intérieure 28.

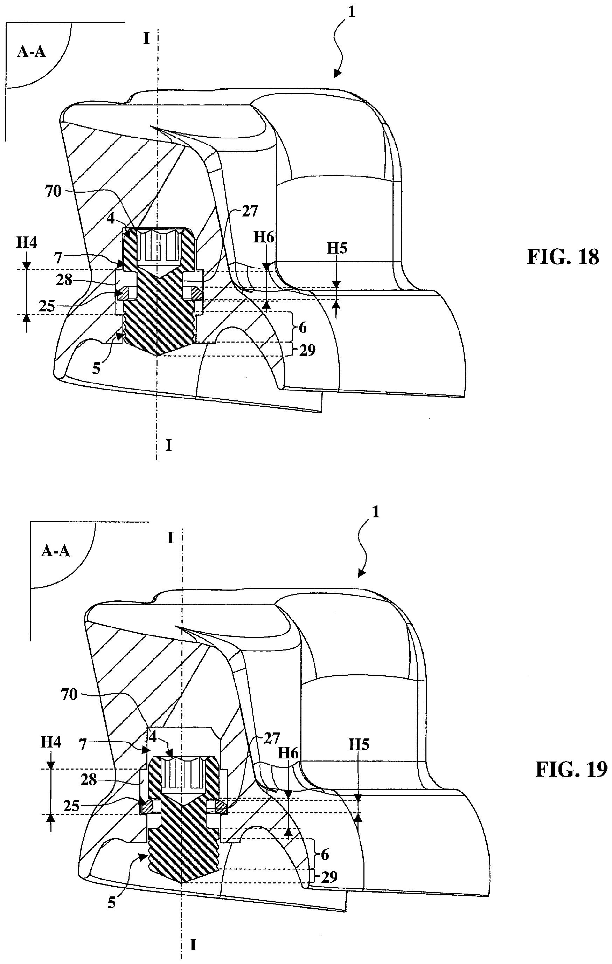

Dans la variante illustrée sur les figures 18 et 19, la capacité de translation de la vis de transfixation 4 entre ses positions de retrait et de vissage est procurée par le fait que la gorge périphérique intérieure 28 et la gorge périphérique extérieure 27 présentent des hauteurs respectives H4 et H6 selon la direction axiale I-I supérieures à la hauteur H5 de la bague de retenue 25 venant en prise dans la gorge périphérique intérieure 28.

Dans tous les modes de réalisation illustrés sur les figures, on voit que :
- la tige 5 de la vis de transfixation 4 se termine par un tronçon distal de centrage 29 faisant suite au tronçon fileté 6,
- le tronçon distal de centrage 29 comporte une section transversale dont les dimensions diminuent en se déplaçant à l'écart du tronçon fileté 6.

On voit, sur les figures 3, 14, 16 et 18 où la vis de transfixation 4 est en position de retrait, que la vis de transfixation 4 dépasse hors de l'alésage 7 dans lequel elle est retenue captive selon tout ou partie de son tronçon de centrage 29. Son tronçon fileté 6 ne dépasse pas hors de l'alésage 7 de façon à le maintenir protégé.

Sur les figures 14 à 19, le tronçon de centrage 29 est sensiblement conique tandis qu'il est sensiblement tronconique sur les figures 3, 4 et 11. En alternative, une forme arrondie peut être utilisée.

On voit plus particulièrement sur la figure 11 que :
- le filetage 8 du tronçon fileté 6 de la vis de transfixation 4 comporte un premier tronçon de filetage 61 et un deuxième tronçon de filetage 62 faisant suite au premier tronçon de filetage 61 et s'étendant jusqu'au tronçon de centrage 29,
- le premier tronçon de filetage 61 comporte un diamètre extérieur D1 constant,
- le deuxième tronçon de filetage 62 comporte un diamètre extérieur D2 qui décroît progressivement en direction du tronçon de centrage 29.

Sur la figure 12, on voit que le filetage 8 du tronçon fileté 6 de la vis de transfixation 4 comporte trois filets 8a, 8b, 8c. Le premier tronçon 12 fileté intérieurement de l'implant 2 ou 3 (figure 5) comporte un nombre de filets correspondant.

Il est expressément indiqué que l'implant 2 ou 3 de la figure 5, avec son premier tronçon 12 fileté intérieurement s'étendant immédiatement depuis l'orifice 11a de l'alésage intérieur 11, constitue une invention indépendante pour laquelle une protection par brevet pourra être recherchée. Un tel implant dentaire 2 ou 3 peut avoir une longueur totale réduite limitant les risques de conflit avec les vis de transfixation d'une prothèse dentaire transfixée, et ce d'autant plus que la disposition du premier tronçon 12 fileté intérieurement permet de réduire la longueur de la vis de transfixation.

Dans la première variante illustrée sur les figures 5 et 6, l'implant dentaire 2 ou 3 est en une seule pièce, et son extrémité supérieure 2a ou 3a est destinée à traverser en partie au moins la muqueuse.

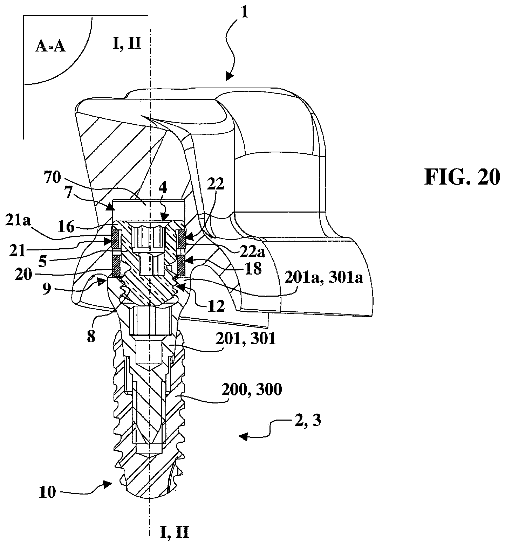

Dans une deuxième variante illustrée sur la figure 20, l'implant dentaire 2 ou 3 est en deux pièces en étant constitué d'un ancrage osseux 200 ou 300 et d'un prolongement transmuqueux 201 ou 301. Le prolongement transmuqueux 201 ou 301 comporte une extrémité supérieure 201a ou 301a destinée à traverser en partie au moins la muqueuse.

La présente invention n'est pas limitée aux modes de réalisation qui ont été explicitement décrits, mais elle en inclut les diverses variantes et généralisations contenues dans le domaine des revendications ci-après.

## Revendications

1. Prothèse dentaire (1) plurale transfixée destinée à être rapportée et fixée sur une pluralité d'implants dentaires (2, 3) au moyen de plusieurs vis de transfixation (4) ayant chacune une tige (5) à tronçon fileté (6) destiné à être reçu par vissage dans un implant dentaire (2, 3) respectif, ladite prothèse dentaire (1) comprenant lesdites vis de transfixation (4), **caractérisée en ce que** :
- chaque vis de transfixation (4) est retenue captive dans un alésage (7) respectif ménagé dans la prothèse dentaire (1) plurale transfixée et s'étendant selon une direction axiale (I-I) respective,
- chaque vis de transfixation (4) captive est mobile en rotation autour de la direction axiale (I-I) de l'alésage (7) respectif, et est déplaçable en translation selon la direction axiale (I-I) de l'alésage (7) respectif entre une position de retrait et au moins une position de vissage,
- en position de retrait, le filetage (8) du tronçon fileté (6) de la vis de transfixation (4) ne dépasse pas hors de l'alésage (7) respectif dans lequel est retenue captive la vis de transfixation (4),
- en position de vissage, le filetage (8) du tronçon fileté (6) de la vis de transfixation (4) dépasse au moins en partie hors de l'alésage (7) respectif dans lequel est retenue captive la vis de transfixation (4).

2. Prothèse dentaire (1) plurale transfixée selon la revendication 1, **caractérisée en ce que** :
- la tige (5) de chaque vis de transfixation (4) se termine par un tronçon distal de centrage (29) faisant suite au tronçon fileté (6),
- le tronçon distal de centrage (29) comporte une section transversale dont les dimensions diminuent en se déplaçant à l'écart du tronçon fileté (6),
- en position de retrait, la vis de transfixation (4) dépasse hors de l'alésage (7) dans lequel elle est retenue captive selon tout ou partie de son tronçon de centrage (29).

3. Prothèse dentaire (1) plurale transfixée selon la revendication 2, **caractérisée en ce que** le tronçon de centrage (29) est sensiblement conique ou tronconique.

4. Prothèse dentaire (1) plurale transfixée selon l'une des revendications 2 ou 3, **caractérisée en ce que** :
- le filetage (8) du tronçon fileté (6) de la vis de transfixation (4) comporte un premier tronçon de filetage (61), et comporte un deuxième tronçon de filetage (62) faisant suite au premier tronçon de filetage (61) et s'étendant jusqu'au tronçon de centrage (29),
- le premier tronçon de filetage (61) comporte un diamètre extérieur (D1) constant,
- le deuxième tronçon de filetage (62) comporte un diamètre extérieur (D2) qui décroît en direction du tronçon de centrage (29).

5. Prothèse dentaire (1) plurale transfixée selon l'une quelconque des revendications 1 à 3, **caractérisée en ce que** le filetage (8) du tronçon fileté (6) de la vis de transfixation (4) comporte au moins deux filets (8a-8c), de préférence trois filets.

6. Prothèse dentaire (1) plurale transfixée selon l'une quelconque des revendications 1 à 5, **caractérisée en ce que** :
- la vis de transfixation (4) comporte un tronçon (15) à épanouissement radial (16) depuis lequel s'étend un tronçon de vis de transfixation (17) présentant une section transversale extérieure à dimensions inférieures à celles de l'épanouissement radial (16),
- chaque vis de transfixation (4) est retenue captive dans son alésage (7) respectif par l'intermédiaire d'un organe de fixation (18) venant simultanément :
• au moins en partie s'engager dans un logement périphérique intérieur (19) ménagé dans l'alésage (7) respectif de la prothèse dentaire (1) plurale transfixée,
• sous l'épanouissement radial (16) et autour du tronçon de vis de transfixation (17) présentant une section transversale extérieure à dimensions inférieures à celles de l'épanouissement radial (16).

7. Prothèse dentaire (1) plurale transfixée selon la revendication 6, **caractérisée en ce que** le logement périphérique intérieur (19) ménagé dans l'alésage (7) respectif, et/ou le tronçon de vis de transfixation (17) présentant une section transversale extérieure à dimensions inférieures à celles de l'épanouissement radial (16), présentent une hauteur (H1) selon la direction axiale (I-I) supérieure à la hauteur (H2) de la partie de l'organe de fixation (18) venant en prise dans le logement périphérique intérieur (19), de façon à permettre la translation de la vis de transfixation (4) entre ses positions de retrait et de vissage.

8. Prothèse dentaire (1) plurale transfixée selon l'une des revendications 6 ou 7, **caractérisée en ce que** :
- l'organe de fixation (18) est une bague de retenue (25) à fente (26) radiale,
- le logement périphérique intérieur (19) est une gorge annulaire s'étendant radialement par rapport à la direction axiale (I-I) d'alésage (7).

9. Prothèse dentaire (1) plurale transfixée selon l'une des revendications 6 ou 7, **caractérisée en ce que** :
- l'organe de fixation (18) comprend une bague annulaire (20) à symétrie de révolution autour d'un axe central (II-II), et s'étendant selon l'axe central (II-II) entre une extrémité proximale (20a) et une extrémité distale (20b),
- l'organe de fixation (18) comprend au moins un tronçon angulaire (21, 22) se développant en arc entre une première extrémité (21a, 22a) reliée à l'extrémité distale (20b) de la bague annulaire (20) et une deuxième extrémité (21b, 22b) libre,
- ledit au moins un tronçon angulaire (21, 22) est en partie déplaçable à partir de sa première extrémité (21a, 22a) dans un plan transversal (P1) perpendiculaire à l'axe central (II-II) entre une position de retrait et au moins une position de saillie, en étant en permanence élastiquement rappelé en position de saillie,
- en position de retrait, ledit au moins un tronçon angulaire (21, 22) est compris dans le volume d'un cylindre (C1) prolongeant la surface cylindrique extérieure de la bague annulaire (20),
- en position de saillie, la deuxième extrémité (21b, 22b) libre dudit au moins un tronçon angulaire (21, 22) dépasse au-delà du volume du cylindre (C1) prolongeant la surface cylindrique extérieure de la bague annulaire (20).

10. Prothèse dentaire (1) plurale transfixée selon la revendication 9, **caractérisée en ce que** le logement périphérique intérieur (19) comporte au moins un tronçon angulaire de gorge (23, 24) s'étendant radialement par rapport à la direction axiale (I-I) d'alésage (7).

11. Prothèse dentaire (1) plurale transfixée selon l'une des revendications 9 ou 10, **caractérisée en ce que** le logement périphérique intérieur (19) est une gorge annulaire s'étendant radialement par rapport à la direction axiale (I-I) d'alésage (7).

12. Prothèse dentaire (1) plurale transfixée selon l'une quelconque des revendications 1 à 5, **caractérisée en ce que** la vis de transfixation (4) est montée rotative et retenue en translation dans son alésage (7) respectif par l'intermédiaire d'une bague de retenue (25) compressible, de préférence au moyen d'une fente (26) radiale, venant simultanément en prise dans une gorge périphérique extérieure (27) ménagée sur la vis de transfixation (4) et dans une gorge périphérique intérieure (28) ménagée dans l'alésage (7) respectif.

13. Prothèse dentaire (1) plurale transfixée selon la revendication 12, **caractérisée en ce que** la gorge périphérique intérieure (28) ménagée dans l'alésage (7) respectif, et/ou la gorge périphérique extérieure (27) ménagée sur la vis de transfixation (4), présentent une hauteur (H4, H6) selon la direction axiale (I-I) supérieure à la hauteur (H5) de la bague de retenue (25) venant en prise dans la gorge périphérique intérieure (28) ménagée dans l'alésage (7) respectif, de façon à permettre la translation (4) de la vis de transfixation entre ses positions de retrait et de vissage.

14. Ensemble dentaire comportant :
- une prothèse dentaire (1) plurale transfixée selon l'une quelconque des revendications 1 à 13,
- un implant dentaire (2, 3) s'étendant entre une extrémité distale de connexion (9) destinée à recevoir la prothèse dentaire (1) plurale transfixée, et une extrémité proximale d'ancrage (10) destinée à être insérée dans l'os maxillaire ou mandibulaire d'un patient, comprenant un alésage intérieur (11) borgne débouchant à l'extrémité distale de connexion (9) et comportant un premier tronçon (12) fileté intérieurement destiné à recevoir le tronçon fileté (6) d'une vis de transfixation (4),
**caractérisé en ce que** le premier tronçon (12) fileté intérieurement s'étend depuis l'orifice (11a) de l'alésage intérieur (11) borgne en direction de l'extrémité proximale d'ancrage (10).

15. Ensemble dentaire selon la revendication 14, **caractérisé en ce que** l'implant dentaire (2, 3) comporte une empreinte de vissage (13) à section transversale non circulaire, accessible depuis l'orifice (11a) de l'alésage intérieur (11) borgne à travers le premier tronçon (12) fileté intérieurement.

16. Ensemble dentaire selon l'une des revendications 14 ou 15, **caractérisé en ce que** l'implant dentaire (2, 3) comporte un deuxième tronçon (14) fileté intérieurement, accessible depuis l'orifice (11a) de l'alésage intérieur (11) borgne à travers le premier tronçon (12) fileté intérieurement et l'empreinte de vissage (13), et comportant un diamètre de filetage inférieur au diamètre de filetage du premier tronçon (12) fileté intérieurement.

## Patentansprüche

1. Transfixierte multiple Zahnprothese (1) zum Anbringen und Befestigen an einer Vielzahl von Zahnimplantaten (2, 3) mit einigen Transfixierschrauben (4), von denen jede einen Schaft (5) mit einem Gewindeabschnitt (6) aufweist, der durch Einschrauben in ein entsprechendes Zahnimplantat (2, 3) aufnehmbar ist, wobei die genannte Zahnprothese (1) die genannten Transfixierschrauben (4) umfasst, **dadurch gekennzeichnet**, das:
- jede Transfixierschraube (4) unverlierbar in einer entsprechenden Bohrung (7) gehalten ist, die in der transfixierten dentalen Prothese (1) ausgebildet ist und sich entlang einer entsprechenden axialen Richtung (I-I) erstreckt,
- jede unverlierbare Transfixierschraube (4) in drehbar um die axiale Richtung (I-I) der entsprechenden Bohrung (7) und entlang der axialen Richtung (I-I) der entsprechenden Bohrung (7) zwischen einer zurückgestellten Position und mindestens einer Schraubposition bewegbar ist,
- in der zurückgestellten Position das Gewinde (8) des Gewindeabschnittes (6) der Transfixierschraube (4) nicht über die entsprechende Bohrung (7), in der die Tansfixierschraube (4) unverlierbar gehalten ist, hervorsteht,
- in der Schraubposition das Gewinde (8) des Gewindeabschnittes (6) der Transfixierschraube (4) wenigstens teilweise über die entsprechende Bohrung (7), in der die Transfixierschraube (4) unverlierbar gehalten ist, hervorsteht.

2. Transfixierte multiple Zahnprothese (1) nach Anspruch 1, **dadurch gekennzeichnet, dass**:
- der Schaft (5) jeder Transfixierschraube (4) in einem distalen Zentrierbereich (29) endet, der auf den Gewindeabschnitt (6) folgt,
- der distale Zentrierbereich (29) einen Querschnitt aufweist, dessen Ausdehnung in der Richtung weg vom Gewindeabschnitt (6) abnimmt,
- in der zurückgestellten Position, die Transfixierschraube (4) über die Bohrung (7) hervorsteht, in der sie unverlierbar über alle einer einen Teil ihres Zentrierbereiches (29) gehalten ist.

3. Transfixierte multiple Zahnprothese (1) nach Anspruch 2, **dadurch gekennzeichnet, dass** der Zentrierbereich (29) im Wesentlichen konisch oder kegelstumpfförmig ist.

4. Transfixierte multiple Zahnprothese (1) nach einem der Ansprüche 2 oder 3, **dadurch gekennzeichnet, dass**:
- das Gewinde (8) des Gewindeabschnittes (6) der Transfixierschraibe (4) einen ersten Gewindeabschnitt (61) aufweist, und es einen zweiten Gewindeabschnitt (62) aufweist, der sich an den ersten Gewindeabschnitt (61) anschließt und bis zum Zentrierbereich (29) erstreckt,
- wobei der erste Gewindeabschnitt (61) einen konstanten Außendurchmesser (D1) besitzt,
- wobei der zweite Gewindeabschnitt (62) einen Außendurchmesser (D2) besitzt,der in Richtung des Zentrierbereiches (29) abnimmt.

5. Transfixierte multiple Zahnprothese (1) nach einem der Ansprüche 1 bis 3, **dadurch gekennzeichnet, dass** das Gewinde (8) des Gewindeabschnittes (6) der Transfixierschraube (4) wenigstens zwei Gewinde (8a-8c), vorzugsweise drei Gewinde aufweist.

6. Transfixierte multiple Zahnprothese (1) nach einem der Ansprüche 1 bis 5, **dadurch gekennzeichnet, dass**:
- die Transfixierschraube (4) einen Bereich (15) mit einer radialen Erweiterung (16) aufweist, von der sich aus eine Transfixierschraubenabschnitt (17) erstreckt, der einen äußeren Querschnitt mit Ausdehnungen umfasst, die kleiner sind, als die der radialen Erweiterung (16),
- jede Transfixierschraube (4) unverlierbar in ihrer entsprechenden Bohrung (7) mittels eines Fixiergliedes (18) gehalten ist, die alle:
• in wenigstens einen Teile eines inneren periphären Sitzes (19) eingreifen, der in der entsprechenden Bohrung (7) der transfixierten multiplen Zahnprothese (1) ausgebildet ist,
• unter der radialen Erweiterung (16) und um die Transfixierschraubenabschnitt (17) einen äußeren Querschnitt mit Ausdehnungen aufweisen, die kleiner sind als die der radialen Erweiterung (16).

7. Transfixierte multiple Zahnprothese (1) nach Anspruch 6, **dadurch gekennzeichnet, dass** der in der entsprechenden Bohrung (7) ausgebildete innere periphäre Sitz (19) und/oder der Transfixierschraubenabschnitt (17) einen äußeren Querschnitt mit Ausdehnungen aufweisen, der kleiner ist, als die der radialen Erweiterung (16), eine Höhe (H1) in der axialen Richtung (I-I) aufweisen, die größer ist, als die Höhe (H2) des Teils des Fixiergliedes (18), das in den inneren periphären Sitz (19) eingreift, um die Längsbewegung der Transfixierschraube (4) zwischen der zurückgestellten Position und der Schraubposition zuzulassen.

8. Transfixierte multiple Zahnprothese (1) nach Anspruch 6 oder 7, **dadurch gekennzeichnet, dass**:
- das Fixierglied (18) ein Rückhaltering (25) mit einem radialen Schlitz (26) ist,
- der innere periphäre Sitz (19) eine kranzförmige Kerbe ist, die sich radial bezüglich der axialen Richtung (I-I) der Bohrung (7) erstreckt.

9. Transfixierte multiple Zahnprothese (1) nach Anspruch 6 oder 7, **dadurch gekennzeichnet, dass**:
- das Fixierglied (18) einen kranzförmigen Ring (20) umfasst, der eine Rotationssymmetrie um eine zentrale Achse (II-II) besitzt und der sich entlang der zentralen Achse (II-II) zwischen einem proximalen Ende (20a) und einem distalen Ende (20b) erstreckt,
- das Fixierglied (18) wenigstens einen kranzförmigen Abschnitt (21, 22) umfasst, der sich in einem Bogen zwischen einem ersten Ende (21a, 22a), welches mit dem distalen Ende (20b) des kranzförmigen Rings (20) verbunden ist und einem zweiten freien Ende (21b, 22b) erstreckt,
- der besagte wenigstens eine kranzförmige Abschnitt (21, 22) wenigstens teilweise von seinem ersten Ende (21a, 22a) in einer Querebene (P1) rechtwinklig zur zentralen Achse (II-II) zwischen einer zurückgestellten Position und wenigstens einer vorstehenden Position beweglich ist und dabei ständig elastisch in die vorstehende Position zurückkehrt,
- in der zurückgestellten Position der besagte wenigstens eine kranzförmige Abschnitt (21, 22) im Volumen eines Zylinders (C1) enthalten ist, der die äußere zylindrische Oberfläche des kranzförmigen Rings (20) fortsetzt,
- in der vorstehenden Position das zweite freie Ende (21b, 22b) des besagten wenigstens einen kranzförmigen Abschnitts (21, 22) sich über das Volumen des Zylinders (C1) erstreckt, der die äußere Oberfläche des kranzförmigen Rings (20) fortsetzt.

10. Transfixierte multiple Zahnprothese (1) nach Anspruch 9, **dadurch gekennzeichnet, dass** der innere periphäre Sitz (19) wenigstens einen kranzförmigen Kerbenbereich (23, 24) aufweist, der sich radial hinsichtlich der axialen Richtung (I-I) der Bohrung (7) erstreckt.

11. Transfixierte multiple Zahnprothese (1) nach Anspruch 9 oder 10, **dadurch gekennzeichnet, dass** der innere periphäre Sitz (19) eine kranzförmige Kerbe ist, die sich radial hinsichtlich der axialen Richtung (I-I) der Bohrung (7) erstreckt.

12. Transfixierte multiple Zahnprothese (1) nach einem der Ansprüche 1 bis 5, **dadurch gekennzeichnet, dass** die Transfixierschraube (4) drehbar und in Längsrichtung zurückgehalten in ihrer entsprechenden Bohrung (7) mittels eines komprimierbaren Rückhalterings (25) vorzugsweise mittels eines radialen Schlitzes (26) befestigt ist, der gleichzeitig in eine äußere periphäre Kerbe (27), die auf der Transfixierschraube (4) ausgebildet ist, und in eine innere periphäre Kerbe (28), die in der entsprechenden Bohrung (7) ausgebildet ist, eingreift.

13. Transfixierte multiple Zahnprothese (1) nach Anspruch 12, **dadurch gekennzeichnet, dass** die in der entsprechenden Bohrung (7) ausgebildete innere periphäre Kerbe (28) und/oder die auf der Transfixierschraube (4) ausgebildete äußere periphäre Kerbe (27) in der axialen Richtung (I-I) eine Höhe (H4, H6) aufweist, die größer ist, als die Höhe (H5) des Rückhalterings (25), der in die innere periphäre Kerbe (28) eingreift, die in der entsprechenden Bohrung (7) ausgebildet ist, derart, dass die Längsbewegung (4) der Transfixierschraubezwischen seinen zurückgehaltenen und seinen Schraubpositionen ermöglicht wird.

14. Dentaler Aufbau umfassend:
- eine transfixierte multiple Zahnprothese (1) nach einem der Ansprüche 1 bis 13,
- ein dentales Implantat (2, 3) zwischen einem distalen Verbindungsende (9) zum Aufnehmen der transfixierten multiplen Zahnprothese (1) und eines proximalen Verankerungsendes (10) zum Einsetzen in den maxillaren oder mandibularen Knochen eines Patienten, umfassend eine versteckte innere Bohrung (11), die zu einem distalen Verbindungsende (9) führt und umfassend einen ersten internen Gewindeabschnitt (12) zum Aufnehmen des Gewindeabschnittes (6) der Transfixierschraube (4),
**dadurch gekennzeichnet, dass** der erste interne Gewindeabschnitt (12) sich von der Öffnung (11a) der versteckten Bohrung (11) in der Richtung des proximalen Verankerungsendes (10) erstreckt.

15. Dentaler Aufbau nach Anspruch 14, **dadurch gekennzeichnet, dass** das dentale Implantat (2, 3) einen Verschraubungssockel (13) mit einem nicht kreisförmigen Querschnitt aufweist, der über die Öffnung (11a) der versteckten Bohrung (11) über den ersten internen Gewindeabschnitt (12) zugänglich ist.

16. Dentaler Aufbau nach Anspruch 14 oder 15, **dadurch gekennzeichnet, dass** das dentale Implantat (2, 3) einen zweiten internen Gewindeabschnitt (14) aufwesit, der von der Öffnung (11a) der versteckten Bohrung (11) über den erste internen Gewindeabschnitt (12) und den Verschraubungssockel (13) zugänglich ist, und der einen Gewindedurchmesser aufweist, der kleiner ist, als der Gewindedurchmesser des ersten internen Gewindeabschnittes (12).

## Claims

1. Transfixed multiple dental prosthesis (1) intended to be attached and fixed to a plurality of dental implants (2, 3) by means of several transfixing screws (4), each having a shank (5) with a threaded portion (6) intended to be received by screwing into a respective dental implant (2, 3), said dental prosthesis (1) comprising said transfixing screws (4), **characterized in that**:
- each transfixing screw (4) is held captive in a respective bore (7) formed in the transfixed multiple dental prosthesis (1) and extending along a respective axial direction (I-I),
- each captive transfixing screw (4) is movable in rotation about the axial direction (I-I) of the respective bore (7) and is movable in translation along the axial direction (I-I) of the respective bore (7) between a retracted position and at least one screwing position,
- in the retracted position, the threading (8) of the threaded portion (6) of the transfixing screw (4) does not protrude from the respective bore (7) in which the transfixing screw (4) is held captive,
- in the screwing position, the threading (8) of the threaded portion (6) of the transfixing screw (4) protrudes at least in part from the respective bore (7) in which the transfixing screw (4) is held captive.

2. Transfixed multiple dental prosthesis (1) according to claim 1, **characterized in that**:
- the shank (5) of each transfixing screw (4) terminates in a distal centering portion (29) following on from the threaded portion (6),
- the distal centering portion (29) has a cross section whose dimensions decrease in the direction away from the threaded portion (6),
- in the retracted position, the transfixing screw (4) protrudes from the bore (7), in which it is held captive, via all or part of its centering portion (29).

3. Transfixed multiple dental prosthesis (1) according to claim 2, **characterized in that** the centering portion (29) is substantially conical or frustoconical.

4. Transfixed multiple dental prosthesis (1) according to either of claims 2 and 3, **characterized in that**:
- the threading (8) of the threaded portion (6) of the transfixing screw (4) has a first threading portion (61), and it has a second threading portion (62) following on from the first threading portion (61) and extending as far as the centering portion (29),
- the first threading portion (61) has a constant external diameter (D1),
- the second threading portion (62) has an external diameter (D2) which decreases in the direction of the centering portion (29).

5. Transfixed multiple dental prosthesis (1) according to any one of claims 1 to 3, **characterized in that** the threading (8) of the threaded portion (6) of the transfixing screw (4) has at least two threads (8a-8c), preferably three threads.

6. Transfixed multiple dental prosthesis (1) according to any one of claims 1 to 5, **characterized in that**:
- the transfixing screw (4) has a portion (15) with a radial widening (16), from which there extends a transfixing screw portion (17) that has an external cross section with dimensions smaller than those of the radial widening (16),
- each transfixing screw (4) is held captive in its respective bore (7) by way of a fixing member (18) which simultaneously:
• engages at least in part in an inner peripheral seat (19) formed in the respective bore (7) of the transfixed multiple dental prosthesis (1),
• has, under the radial widening (16) and around the transfixing screw portion (17), an external cross section with dimensions smaller than those of the radial widening (16).

7. Transfixed multiple dental prosthesis (1) according to claim 6, **characterized in that** the inner peripheral seat (19) formed in the respective bore (7), and/or the transfixing screw portion (17) having an external cross section with dimensions smaller than those of the radial widening (16), have a height (H1) in the axial direction (I-I) greater than the height (H2) of the part of the fixing member (18) engaging in the inner peripheral seat (19), so as to allow the translation of the transfixing screw (4) between its retracted and screwing positions.

8. Transfixed multiple dental prosthesis (1) according to either of claims 6 and 7, **characterized in that**:
- the fixing member (18) is a retaining ring (25) with a radial slit (26),
- the inner peripheral seat (19) is an annular groove extending radially with respect to the axial direction (I-I) of the bore (7).

9. Transfixed multiple dental prosthesis (1) according to either of claims 6 and 7, **characterized in that**:
- the fixing member (18) comprises an annular ring (20) which has symmetry of revolution about a central axis (II-II) and which extends along the central axis (II-II) between a proximal end (20a) and a distal end (20b),
- the fixing member (18) comprises at least one angular portion (21, 22) developing in an arc between a first end (21a, 22a), joined to the distal end (20b) of the annular ring (20), and a second free end (21b, 22b),
- said at least one angular portion (21, 22) is in part movable from its first end (21a, 22a), in a transverse plane (P1) perpendicular to the central axis (II-II), between a retracted position and at least one protruding position, being elastically returned permanently to the protruding position,
- in the retracted position, said at least one angular portion (21, 22) is included within the volume of a cylinder (C1) continuing the outer cylindrical surface of the annular ring (20),
- in the protruding position, the second free end (21b, 22b) of said at least one angular portion (21, 22) extends beyond the volume of the cylinder (C1) continuing the outer cylindrical surface of the annular ring (20).

10. Transfixed multiple dental prosthesis (1) according to claim 9, **characterized in that** the inner peripheral seat (19) has at least one angular groove portion (23, 24) extending radially with respect to the axial direction (I-I) of the bore (7).

11. Transfixed multiple dental prosthesis (1) according to either of claims 9 and 10, **characterized in that** the inner peripheral seat (19) is an annular groove extending radially with respect to the axial direction (I-I) of the bore (7).

12. Transfixed multiple dental prosthesis (1) according to any one of claims 1 to 5, **characterized in that** the transfixing screw (4) is mounted rotatably and retained in translation in its respective bore (7) by way of a compressible retaining ring (25), preferably by means of a radial slit (26), simultaneously engaging in an outer peripheral groove (27) formed on the transfixing screw (4) and in an inner peripheral groove (28) formed in the respective bore (7).

13. Transfixed multiple dental prosthesis (1) according to claim 12, **characterized in that** the inner peripheral groove (28) formed in the respective bore (7), and/or the outer peripheral groove (27) formed on the transfixing screw (4), have a height (H4, H6), in the axial direction (I-I), greater than the height (H5) of the retaining ring (25) engaging in the inner peripheral groove (28) formed in the respective bore (7), in such a way as to permit the translation (4) of the transfixing screw between its retracted and screwing positions.

14. Dental assembly comprising:
- a transfixed multiple dental prosthesis (1) according to any one of claims 1 to 13,
- a dental implant (2, 3) extending between a distal connection end (9), intended to receive the transfixed multiple dental prosthesis (1), and a proximal anchoring end (10), intended to be inserted in the maxillary or mandibular bone of a patient, comprising a blind inner bore (11) that leads to the distal connection end (9), and comprising a first internally threaded portion (12) intended to receive the threaded portion (6) of a transfixing screw (4),
**characterized in that** the first internally threaded portion (12) extends from the orifice (11a) of the blind inner bore (11) in the direction of the proximal anchoring end (10).

15. Dental assembly according to claim 14, **characterized in that** the dental implant (2, 3) has a screwing socket (13) with a non-circular cross section, accessible from the orifice (11a) of the blind inner bore (11) via the first internally threaded portion (12).

16. Dental assembly according to either of claims 14 and 15, **characterized in that** the dental implant (2, 3) has a second internally threaded portion (14), accessible from the orifice (11a) of the blind inner bore (11) via the first internally threaded portion (12) and the screwing socket (13), and having a threading diameter smaller than the threading diameter of the first internally threaded portion (12).
